# EUROPEAN PATENT SPECIFICATION

(11) **EP 1 827 688 B1**
(45) Date of publication and mention of the grant of the patent: **03.09.2014**
(21) Application number: 04803392.2
(22) Date of filing: 01.12.2004
(51) Int. Cl.: B01J 31/24, B01J 31/22, B01J 31/18, C07F 15/00

(54) **NOVEL METATHESIS RUTHENIUM CATALYST**
NEUER RUTHENIUM-METATHESEKATALYSATOR
NOUVEAU CATALYSEUR DE METATHESE A BASE DE RUTHENIUM

(30) Priority: 04.12.2003 EP 03027828
(43) Date of publication of application: 05.09.2007
(73) Proprietor: BOEHRINGER INGELHEIM INTERNATIONAL GMBH, 55216 Ingelheim (DE); Boehringer Ingelheim Pharma GmbH & Co. KG, 55216 Ingelheim (DE)
(72) Inventor: ARLT, Dieter Ligandchemie GmbH, 32657 Lemgo (DE)
(74) Representative: Simon, Elke Anna Maria
(86) International application number: PCT/EP2004/013621
(87) International publication number: WO 2005/053843

(56) References cited:
- GRELA, K. ET AL.: "A highly efficient ruthenium catalyst for metathesis reactions" ANGEW. CHEM. INT. ED., vol. 41, no. 21, 2002, pages 4038-4040, XP002278573 cited in the application
- WAKAMATSU, H. ET AL.: "A new highly efficient ruthenium metathesis catalyst" ANGEW. CHEM., vol. 114, no. 13, 2002, pages 2509-2511, XP002278574 cited in the application
- GARBER S B ET AL: "EFFICIENT AND RECYCLABLE MONOMERIC AND DENDRITIC RU-BASED METATHESIS CATALYSTS" JOURNAL OF THE AMERICAN CHEMICAL SOCIETY, AMERICAN CHEMICAL SOCIETY, WASHINGTON, DC, US, vol. 122, no. 34, 2000, pages 8168-8179, XP002220693 ISSN: 0002-7863
- ZAJA M ET AL: "Ruthenium olefin metathesis catalysts with modified styrene ethers: influence of steric and electronic effects" TETRAHEDRON, ELSEVIER SCIENCE PUBLISHERS, AMSTERDAM, NL, vol. 59, no. 34, 18 August 2003 (2003-08-18), pages 6545-6558, XP004444231 ISSN: 0040-4020

## Description

### TECHNICAL FIELD

This invention relates to ruthenium carbene complexes of formula **1a,** their synthesis and their practical use as catalysts for different types of metathesis reactions.

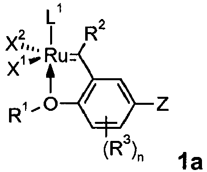

### BACKGROUND INFORMATION

Great progress has been made in the last few years in the application of olefins metathesis in organic synthesis. Some ruthenium carbene complexes acting as (pre)catalysts have been developed, which possess a high activity in various metathesis reactions as well as a broad tolerance for a number of functional groups. This combination of characteristics is a basis for the usability of such (pre)catalysts in organic synthesis.

Moreover, for the practical application, especially in industrial scale, it is very desirable that these ruthenium complexes are stable for a longer period of time in the conditions of thermal load and that they can be stored, purified and applied without the atmosphere of protective gases.

Ruthenium complexes with the above mentioned characteristics are known in literature. See J. Am. Chem. Soc. 2000, 122, 8168-8179 or Tetrahedron Lett. 2000, 41, 9973-9976. However, it has been discovered that a better stability is connected with a lower catalytic activity. Such a limitation was found for example for the (pre)catalyst of the formula A (see Angew. Chemie Int. Ed. 2002, 114, 832).

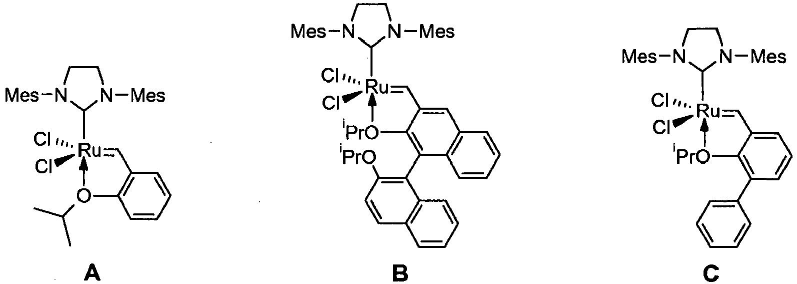

Next, (pre)catalysts of the formula B and C were described, which demonstrate a higher catalytic activity in comparison with the (pre)catalyst of the formula A. The catalysts A, B and C contain an *iso*-propoxy group chelating the metal atom. The reason for a higher activity of the systems B and C is a steric hindrance caused by the presence of a phenyl or a (substituted) naphthyl group in *ortho*-position to the *iso*-propoxy group (Angew. Chemie Int. Ed. 2002, 114, 832; Angew. Chemie Int. Ed. 2002, 114, 2509).

It has been found surprisingly that ruthenium complex (pre)catalysts of general formula 1, demonstrate much higher catalytic activity in comparison to known highly active ruthenium complexes and that these complexes are at the same time thermal and air stable.

### SUMMARY OF THE INVENTION

The present invention relates to novel ruthenium complexes of formula **1a**, their synthesis, the synthesis of all intermediates and the use of complexes of formula **1a** as catalysts or as precatalysts, 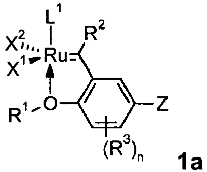 wherein:
- X¹ and X²: are anionic ligands;
- L¹ is: a neutral ligand;
- n is: 0, 1, 2 or 3;
- R¹ is: -C₁₋₆-alkyl, -C₁₋₆-haloalkyl, -C₃₋₈-cycloalkyl or -C₇₋₁₃-aralkyl;
- R² is: H, -C₁₋₆-alkyl, -C₂₋₆-alkenyl, -C₂₋₆-alkynyl or aryl;
- R³ is: -C₁₋₆-alkyl, -C₁₋₆-alkoxy, aryl, F or Cl;
- Z is: -CO-R⁴, -SO₂-R⁵ or -PO(R⁶)₂;
- R⁴ is: -C₁₋₆-alkyl or -C₃₋₈-cycloalkyl, both optionally substituted by one or more groups each independently selected from F, Cl, Br, I or -C₁₋₆-alkoxycarbonyl, or aryl or heteroaryl both optionally substituted by one or more groups each independently selected from F, Cl, Br, I, -C₁₋₆-alkyl, -C₁₋₆-alkoxy, -NO₂, -CN, -CF₃, -OCF₃ or -C₁₋₆-alkoxycarbonyl;
- R⁵ is: -C₁₋₈-fluoroalkyl, aryl or heteroaryl, wherein aryl or heteroaryl are both optionally substituted by one or more groups each independently selected from F, Cl, Br, I, -C₁₋₆-alkyl, -C₁₋₆-alkenyl, -C₁₋₆-alkoxy, -NO₂, -CN, -CF₃, -OCF₃, -C₁₋₆-alkoxycarbonyl, -SO₂-C₁₋₆-alkyl or -SO₂-aryl; and
- R⁶: are each independently -C₁₋₆-alkyl, -C₃₋₈-cycloalkyl, aryl or heteroaryl, wherein aryl or heteroaryl are both optionally substituted by one or more groups each independently selected from F, Cl, Br, I, -C₁₋₆-alkyl, -C₁₋₆-alkoxy, -NO₂, -CN, -CF₃, -OCF₃, or-C₁₋₆-alkoxycarbonyl; or
- R⁴, R⁵ and R⁶: are each independently a group of formula **1'** 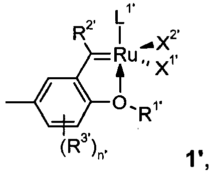
wherein:
- X^{1'} and X^{2'}: are anionic ligands;
- L^{1'} is: a neutral ligand;
- R^{1'} is: -C₁₋₆-alkyl, -C₁₋₆-haloalkyl, -C₃₋₈-cycloalkyl or -C₇₋₁₃-aralkyl;
- R^{2'} is: H, -C₁₋₆-alkyl, -C₂₋₆-alkenyl, -C₂₋₆-alkynyl or aryl;
- R^{3'} is: -C₁₋₆-alkyl, -C₁₋₆-alkoxy, aryl, F or Cl; and
- n' is: 0, 1, 2 or 3.

The compounds of formula **1 a** of the present invention may be used to catalyse olefin metathesis reactions including, but not limited to, ring opening metathesis polymerisation (ROMP), ring closing metathesis (RCM), depolymerisation of unsaturated polymers, synthesis of telechelic polymers, ene-ine metathesis and olefin synthesis.

A further aspect of the invention is the preparation of 2-alkoxy-5-styrene derivatives of formula **2a**, 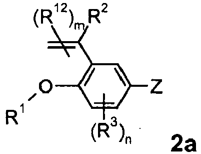 wherein:
- A substituted 2-hydroxy-5-benzaldehyde **3** is alkylated by a R¹V, wherein R¹ has the meaning given for formula **1** and V is a leaving group selected from halogen atoms, C₁₋₆-alkyl-S(O)-O-, C₁₋₆-fluoroalkyl-S(O)-O-, aryl-S(O)-O- or aryl-S(O)₂-O-. 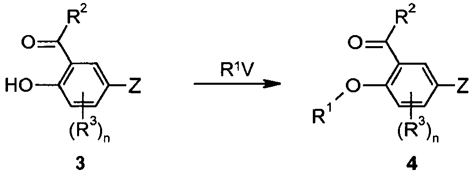
- The substituted 2-alkoxy-5-benzaldehyde of formula **4** is then treated with an olefination reagent of formula 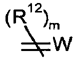 wherein R⁴ and m has the meaning given for formula **2a** and W is a leaving group suitable for olefination reactions; to yield formula **2a**, 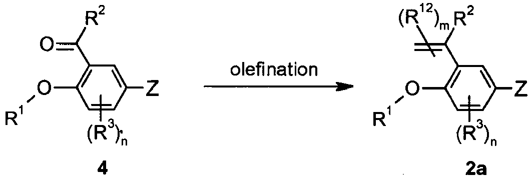
- Compound **2a** can then be reacted with a ruthenium complex of formula **5** to result in the ruthenium complex of the formula **1a** in which L¹ and L² are neutral ligands; R¹³ is H, -C₁₋₆-alkyl, -C₂₋₆-alkenyl, -C₂₋₆-alkynyl or aryl; R¹⁴ is aryl, vinyl or allenyl and X¹ and X² are anionic ligands. 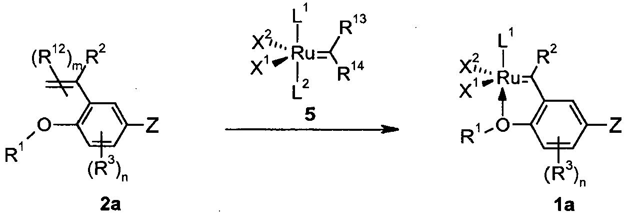
Optionally, the obtained compound of formula **1a** can then be reacted with a different neutral ligand L¹ to replace the neutral ligand L¹ that is present in the compound of formula **1a** and thereby obtain a different compound of formula **1a**.

The compounds herein described may have asymmetric centres. Compounds of the present invention containing an asymmetrically substituted atom may be isolated in optically active or racemic forms. It is well known in the art how to prepare optically active forms, such as by resolution of racemic forms or by synthesis from optically active starting materials. Many geometric isomers of olefins can also be present in the compounds described herein, and all such stable isomers are contemplated in the present invention. *Cis* and *Trans* geometric isomers of the compounds of the present invention are described and may be isolated as a mixture of isomers or as separated isomeric forms. All chiral, diastereomeric, racemic forms and all geometric isomeric forms of a structure are intended, unless the specific stereochemistry or isomeric form is specifically indicated.

### BRIEF DESCRIPTION OF THE DRAWING

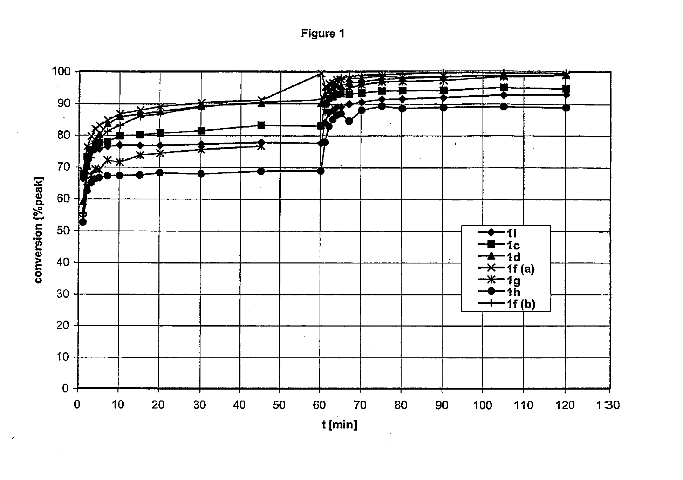

Figure 1 is a graph comparing the cyclisation speed of **22** when using a ruthenium catalyst according to the present invention versus using a known ruthenium catalyst 1 i (see Example 9).

### DETAILED DESCRIPTION OF THE INVENTION

Terms not specifically defined herein should be given the meanings that would be given to them by one of skill in the art in light of the disclosure and the context. As used in the specification, however, unless specified to the contrary, the following terms have the meaning indicated and the following conventions are adhered to.

In the groups, radicals, or moieties defined below, the number of carbon atoms is often specified preceding the group, for example, -C₁₋₆ alkyl means an alkyl group or radical having 1 to 6 carbon atoms. Unless otherwise specified below, conventional definitions of terms control and conventional stable atom valences are presumed and achieved in all formulas and groups.

The term "optionally substituted" as used herein, means that any one or more hydrogens on the designated atom is replaced with a selection from the indicated group, provided that the designated atom's normal valence is not exceeded, and that the substitution results in a stable compound.

The term "aryl" as used herein, either alone or in combination with another substituent, means either an aromatic monocarbocyclic system or aromatic multicarbocyclic systems. For example, aryl includes a phenyl or a naphthyl ring system.

The term "heteroaryl" as used herein, either alone or in combination with another substituent, means a monovalent substituent derived by removal of a hydrogen, especially if a the annelated connection noted, then it means a divalent substituent derived by removal of two hydrogen, from a five-, six-, or seven-membered saturated or unsaturated (including aromatic) heterocycle containing carbon atoms and from one to four ring heteroatoms selected from nitrogen, oxygen and sulphur. Examples of suitable heterocycles include: tetrahydrofuran, thiophene, diazepine, isoxazole, piperidine, dioxane, morpholine, pyrimidine or

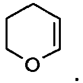

The term "heteroaryl" also includes a heterocycle as defined above fused to one or more other cycle be it a heterocycle or any other cycle. One such examples includes indole or thiazolo[4,5-b]-pyridine. Although generally covered under the term "Heteroaromatic ring", the term "heteroaryl" as used herein precisely defines an unsaturated heterocycle for which the double bonds form an aromatic system. Suitable example of heteroaromatic system include: quinoline, indole, pyridine,

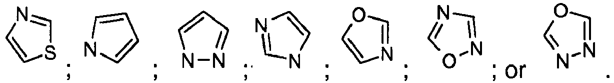

The term "halogen" as used herein means a halogen substituent selected from fluoro, chloro, bromo or iodo.

The term "-C₁₋₆-alkyl" as used herein, either alone or in combination with another substituent, means acyclic, straight or branched chain alkyl substituents containing from one to six carbon atoms. The term -C₁₋₆-alkyl can include i.e. methyl, ethyl, propyl, butyl, hexyl, 1-methylethyl, 1-methylpropyl, 2-methylpropyl or 1, 1-dimethylethyl.

The term "-C₂₋₆-alkenyl" as used herein, either alone or in combination with another substituent, means acyclic, straight or branched chain alkenyl substituents containing from two to six carbon atoms and at least one double bond. The term -C₁₋₆-alkenyl can include i.e. vinyl or allenyl.

The term "-C₂₋₆-alkynyl" as used herein, either alone or in combination with another substituent, means acyclic, straight or branched chain alkynyl substituents containing from two to twenty carbon atoms and at least one triple bond.

The term "-C₃₋₈-cycloalkyl" as used herein, either alone or in combination with another substituent, means a cycloalkyl substituent containing five or six carbon atoms and includes i.e. cyclopentyl or cyclohexyl.

The term "-C₁₋₆-alkoxy" as used herein, either alone or in combination with another substituent, means the substituent -C₁₋₆-alkyl-O- wherein alkyl is as defined above containing up to six carbon atoms. Alkoxy includes methoxy, ethoxy, propoxy, 1-methyl-ethoxy, butoxy or 1,1-dimethylethoxy.

The term "-C₇₋₁₃-aralkyl" as used herein, either alone or in combination with another substituent, means the substituent -Aryl-C₁₋₆-alkyl- wherein alkyl is as defined above containing up to six carbon atoms. Aralkyl includes benzyl, phenylethyl, phenylpropyl, 1-phenyl-1-methylethyl or phenylbutyl.

The term "-C₁₋₆-haloalkyl" as used herein, either alone or in combination with another substituent, means acyclic, straight or branched chain alkyl substituents containing up to six carbon atoms having one or more hydrogens substituted for a halogen selected from bromo, chloro, fluoro or iodo. Preferably the term -C₁₋₆-haloalkyl represents -C₁₋₆-fluoroalkyl. The term "-C₁₋₆-fluoroalkyl" as used herein, either alone or in combination with another substituent, means acyclic, straight or branched chain alkyl substituents containing up to six carbon atoms having one or more hydrogens substituted by a flour atom such as 2-fluorethyl or 2,2,2-trifluorethyl. Preferably the terms -C₁₋₆-haloalkyl and -C₁₋₆-fluoroalkyl represent -C₁₋₆-perflouroalkyl such as trifluoromethyl or pentafluoroethyl.

### ADDITIONAL EMBODIMENTS

Preferred are compounds of general formula **1a**, wherein
- Z is: -CO-R⁴ or -PO(R⁶)₂; and
- R⁴ and R⁶: are a group of formula **1'**.

More preferred are the above mentioned compounds of general formula **1a** wherein
- L¹ is: P(R¹¹)₃ and R¹¹ are each independently -C₁₋₆-alkyl, -C₃₋₈-cycloalkyl or aryl; or
- L¹ is: a ligand of formula **6a, 6b, 6c** or **6d,** 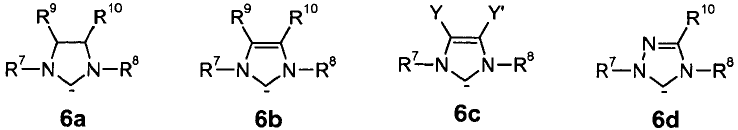
wherein
- R⁷ and R⁸: are each independently H, -C₁₋₆-alkyl, -C₂₋₆-alkenyl or phenyl, wherein the phenyl is optionally substituted with up to three groups independently selected from -C₁₋₆-alkyl, -C₁₋₆-alkoxy or halogen; particularly
- R⁹ and R¹⁰: are each independently H, -C₁₋₆-alkyl, -C₂₋₆-alkenyl or phenyl, wherein the phenyl is optionally substituted with up to three groups independently selected from -C₁₋₆-alkyl, -C₁₋₆-alkoxy or halogen or
- R⁹ and R¹⁰: together with the carbon atoms to which they are attached are combined to form a carbocyclic 3 to 8 membered ring.
- Y and Y': are halogen.

Particularly preferred are compounds wherein
- R⁷and R⁸: are each independently H, -C₁₋₆-alkyl, -C₂₋₆-alkenyl or phenyl, wherein the phenyl is optionally substituted with up to three groups independently selected from -C₁₋₆-alkyl, -C₁₋₆-alkoxy or halogen;
- R⁹ and R¹⁰: are each independently H, -C₁₋₆-alkyl, -C₂₋₆-alkenyl or phenyl, wherein the phenyl is optionally substituted with up to three groups independently selected from -C₁₋₆-alkyl, -C₁₋₆-alkoxy or halogen or
- R⁹ and R¹⁰: together with the carbon atoms to which they are attached are combined to form a carbocyclic 5 to 7 membered ring.

Most preferred are compounds of general formula 1a, wherein
- R¹ is *iso*-propyl;
- R² is H, -C₁₋₆-alkyl or aryl, in particular H;
- X¹ and X² are halogen, particularly chlorine;
- L¹ is P(cyclohexyl)₃ or L¹ is a group of formula **6a**, **6b, 6c** or **6d,** more preferred a group of formula **6a**; 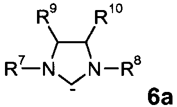
- wherein R⁷ and R⁸ are each 2,4,6-trimethylphenyl; and R⁹ and R¹⁰ are each H.
- R⁷ and R⁸ are 2-methylbenzene, 2, 6-dimethylbenzene or 2, 4, 6-trimethylbenzene;
- n is 0.

In particular most preferred are compounds of general formula **1 a,** wherein
- R¹ is a *iso*-propyl;
- R² is H;
- X¹ and X² are chlorine;
- L¹ is a group of formula **6a**; 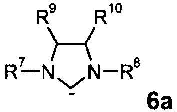
- wherein R⁷ and R⁸ are each 2,4,6-trimethylpheny and R⁹ and R¹⁰ are each H;
- R⁷ and R⁸ are 2-methylbenzene, 2, 6-dimethylbenzene or 2, 4, 6-trimethylbenzene;
- n is 0.

Preferred are compounds of general formula **2a**, wherein
- R¹ is a *iso*-propyl group; and / or
- R² is H, -C₁₋₆-alkyl or aryl, in particular R² has the meaning of a hydrogen atom; and / or
- R¹² is -C₁₋₆-alkyl, in particular methyl or ethyl; and / or
- n is 0 and / or
- m is 0.

Additional embodiments are compounds of formula **2a** wherein:
- R¹ is *iso*-propyl;
- R² is H;
- m is 0; and
- n is 0.

Furthermore preferred is a process for manufacturing complexes of formula **1a**, wherein a compound of general formula **2a**, is reacted with a ruthenium complex of formula 5 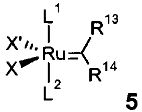 wherein
L¹ and L² are neutral ligands
R¹³ is H, -C₁₋₆-alkyl, -C₂₋₆-alkenyl, -C₂₋₆-alkynyl or aryl; and
R¹⁴ is aryl, vinyl or allenyl; and
X¹ and X² are anionic ligands;
optionally in the presence of a different neutral ligand L¹.

More preferred is the above mentioned synthesis of a ruthenium complex of formula **1,** when the process is carried out:
- in the presence of a copper salt, in particular CuCl; and / or
- in a halogenated or an aromatic solvent, particularly selected from methylene chloride, chloroform, benzene, toluene, xylene, mesitylene or mixtures thereof; and / or
- at a temperature from 0 to 100°C, in particular at a temperature from 10 to 80°C, more particular at a temperature from 20 to 60°C; and / or
- in a time period from 1 to 24h, in particular 1 to 10h, more particular 1 to 4h.

Most preferred is the above mentioned synthesis of a ruthenium complex, wherein the reaction is carried out in one vessel by mixing the ligand of formula **6a**, **6b, 6c or 6d** with a solid complex of formula 5, wherein both ligands L¹ and L² are phosphines of formula P(R¹¹)₃, wherein R¹¹ has the meaning as above and thereafter adding a ligand of formula **2a**.

One preferred variation of the above mentioned synthesis of a ruthenium complex is the generation of the ligands of general formula **6a**, **6b, 6c or 6d** in situ from the stable salts of the formulae **7a**, **7b, 7c** or **7d,** 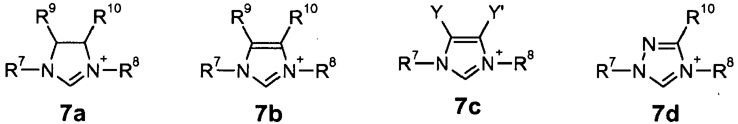 wherein the anion is selected from formiate, acetate, trifluoro-acetate or another acid group, a halogen or [BF_{4]}⁻. Therefore, the salt is preferably in form of a suspension in solvents such as aliphatic or aromatic hydrocarbons, preferably hexane, reacted with a strong base, selected from alkali metal hydrides, alkaline earth metal hydrides or alcoholates, particularly potassium *tert*-pentanolate, potassium *tert*-amylate or potassium *tert*-butanolate. Thereafter reaction is continued by adding a solid complex of formula 5, wherein both ligands L¹ and L² are phosphines of formula P(R¹¹)₃ and thereafter adding a ligand of formula **2a**, to yield a compound of general formula **1a**.

Moreover preferred is a process for manufacturing intermediates, which comprises the steps of a) alkylating a compound of general formula **3,** with a reagent of formula R¹V (**9**) to form a intermediate of formula **4,** and b) reacting **4** with an olefination reagent of formula **10** to yield a compound of the general formula **2a**, 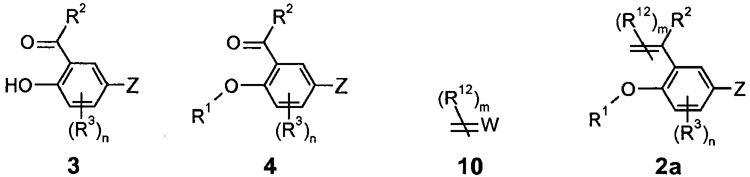 wherein R¹, R², R³, R¹², Z, m and n of formula **2, 3, 4, 9** and **10** are defined as above and
- W is: a leaving group suitable for olefination reactions; and.
- V is: halogen, -C₁₋₆-alkyl-S(O)-O-, -C₁₋₆-fluoroalkyl-S(O)-O-, aryl-S(O)-O- or aryl-S(O)₂-O-.

More preferred is a process, wherein the above mentioned step a) is carried out:
- in an aprotic solvent, in particular selected from DMF, DMSO, acetone, acetonitrile, ethyl acetate, glycol ether, methanol, ethanol or mixtures thereof, more particular the solvent is DMF; or
- in a biphasic solvent system fitted with a phase transfer catalyst; or
- in presence of a catalyst, in particular the catalyst is selected from Cs₂CO₂, CsF, quaternary ammonium salts, crown ethers or cryptands, more particular Cs₂CO₃; or
- in the presence of an alkali metal carbonate or an alkali hydroxide, in particular selected from Na₂CO₃, K₂CO₃, Li₂CO₃, Cs₂CO₃, NaOH, KOH, LiOH, CsOH; or
- in a time period from 1 to 24h, in particular 8 to 24h, more particular 16 to 24h.
- at a temperature from 0 to 150°C, in particular at a temperature from 10 to 100°C, more particular at a temperature from 20 to 80°C; or

Starting from compound **4,** compound **2** is available under Tebbe, Wittig, Wittig-Horner, Wittig-Horner-Emmons or Peterson conditions, but preferred is a process, wherein the above mentioned step b) is carried out:
- in a solvent selected from alcohols, glycol ethers or cyclic ethers, preferred is THF; or
- W is a leaving group suitable for olefination reactions according to Tebbe, with Tebbe's titanium reagent, or according to Wittig, with Wittig's phosphonium ylide reagent, more particular a leaving group selected from PPh₃ or TiCp₂; wherein Ph is substituted or unsubstituted phenyl and Cp is a substituted or unsubstituted cyclopentadienyl-anion, which can be found after reaction in its oxidised form.

Another preferred embodiment of the invention is a process for metathesis reactions of all types, comprising contacting an olefin with a catalyst of general formula **1**; in particular wherein the metathesis reaction is a ring closing or cross metathesis reaction.

The following examples are to illustrate various embodiments of the present invention and are not to be understood as limiting the present invention in a way.

### EXAMPLE 1

a) 4-Methoxy-benzene-phosphonic-acid-diethylester is prepared in analogy to Chem. Ber. (1970) 103, 2428-2436.
b) 4-Methoxy-benzene-phosphonic-acid-diethylester (1.3 g, 12.3 mmole), SOCl₂ (14.6 g, 123 mmole), and DMF (0,9 ml) are heated to reflux under argon for 4 hours. After removal of remaining SOCl₂ under vacuum, 2,4 g crude 4-Methoxy-benzene-phosphonic-acid-dichloride is obtained.
c) 10.8 g 4-Brom-chlorbenzene is reacted with 1.38 g magnesium in 100 ml THF to Grignard reagent. The resulting mixture is added under argon over 40 minutes to a cooled solution (-78°C) of 4-Methoxy-benzenephosphonic-acid-dichloride (2.42 g) and THF (60 ml). Thereafter the mixture is stirred for 10 h at room temperature. A saturated NH₄Cl solution is added and the solvent removed under vacuum. The residue is threatened with 100 ml CH₂Cl₂, filtered through silica gel and dried again. Product is purified by column chromatography (hexane / ethyl acetate, 4 : 2). 2.15 g of pure 4-Methoxyphenyl-bis(4-chlorophenyl)-phosphinoxid is obtained. mₚ: 106-107°C.
d) 4-Methoxyphenyl-bis(4-chlorophenyl)-phosphinoxid (1.84 g, 4.88 mmole) and CH₂Cl₂ (30 ml) are cooled to -78°C. BBr₃ (1,84g, 7,32 mmole) is added and the resulting mixture is stirred for 26 h at r.t.. H₂O (30 ml) is added and CH₂Cl₂ removed under stirring at 80°C. After 6 h the mixture is cooled down and the product precipices. Solid residue is purified by column chromatography (methanol / ethyl acetate / H₂O, 5 : 50 : 0,5). 1.26 g of pure 4-Hydroxyphenyl-bis(4-chlorophenyl)-phosphinoxid is obtained. mₚ: 116-119°C

### EXAMPLE 2

a) K₂CO₃ (298 mg, 2.2 mmole), Cs₂CO₃ (104 mg, 0.32 mmole) and **8** (R^{6'}= *p*-Cl-phenyl, 400 mg, 1.1 mmole) are placed in a flask. DMF (5.5 ml) is added and the mixture is stirred about 5 minutes. After the time, allyl bromide (190 µl, 2.2 mmole) is added and the mixture is stirred for another 24 h at 35°C. DMF is evaporated under vacuum, water (10 ml) is added and the mixture is extracted with ethyl acetate (3 x 25 ml). Combined extracts are dried and evaporated to dryness. 440 mg (99 %) of crude **9** (R^{6'} = *p*-Cl-phenyl) is obtained. 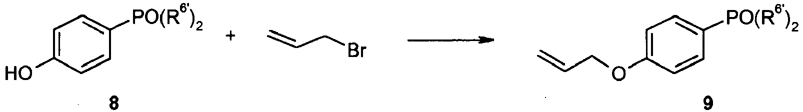 ¹H NMR (400 MHz, CDCl₃): δ = 4.59 (dt, *J* = 5.4, *J* =1.5 Hz, 2H), 5.30-5.34 (m, 1 H), 5.39-5.45 (m, 1 H); 6.00-6.09 (m, 1 H), 6.98-7.01 (m, 2H), 7.43-7.47 (m, 4H), 7.50-7.62 (m, 6H).
b) A solution of **9** (R^{6'}= *p*-Cl-phenyl, 400 mg, 1.0 mmole) in 1,2,4-trichlorobenzene (5 ml) is heated under Argon at 200-210 C for 8 h. After cooling, n-pentane (ca. 40 ml) is added and a light-brown solid is formed, which is filtered-off and dried. 337 mg of crude **10** (R^{6'} = *p*-Cl-phenyl) is obtained. 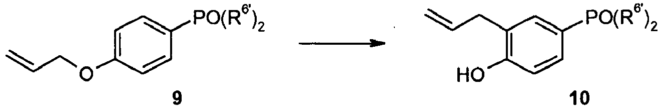 ¹H NMR (400 MHz, CD₃OD): δ = 3.30-3.32 (m, 2H), 4.96-4.98 (m, 1 H), 4.99-5.02 (m, 1 H), 5.87-5.97 (m, 1H) 6.90-6.93 (m, 1H), 7.23-7.29 (m, 1H), 7.31-7.36 (m, 1H), 7.54-7.62 (m, 8H)
c) **10** (R^{6'} = *p*-Cl-phenyl, 300 mg; 0.75 mmole), RhCl₃·3H₂O (19 mg, 0.075 mmole, 10 % mol) and p-toluene sulfonic acid (14 mg, 0.075 mmole, 10 % mol) are placed in a flask. EtOH (5 ml) and H₂O (0.5 ml) are added and the mixture is refluxed under Argon for 5h. A dark red solution is formed. H₂O (10 ml) is added and ethanol was evaporated. The mixture is extracted with CH₂Cl₂ (5 x 15 ml), the combined extracts are washed with water, dried and filtered. The filtrate is evaporated. 294 mg (99 %) of 11 (R^{6'}= *p*-Cl-phenyl) is obtained. 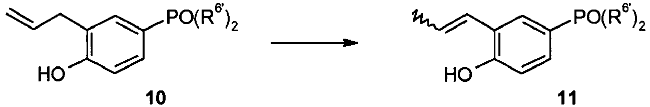 ¹H NMR (400 MHz, CDCl₃): 1.80 (dd, *J* = 6.6, *J* =1.6 Hz, 3H), 6.01-6.11 (m, 1H), 6.57 (d, *J* =16.0 Hz, 1H), 6.92-6.96 (m, 1H), 7.14-7.20 (m, 1H), 7.36-7.46 (m, 4H), 7.53-7.59 (m, 5H)
d) K₂CO₃ (182 mg, 1.3 mmole), Cs₂CO₃ (83 mg, 0.26 mmole), and **11** (R^{6'}= *p*-Cl-phenyl, 270 mg, 0.67 mmole) are placed in flask. DMF (3.0 ml) is added and the mixture is stirred about 5 min.. Thereafter, isopropyl iodide (150 µl, 1.5 mmole) is added and the mixture is stirred for 22 h at 35 °C. H₂O (6 ml) is added and the mixture is extracted with ethyl acetate (3 x 15 ml). Combined extracts are dried and evaporated to dryness. Product is purified by column chromatography (ethyl acetate / cyclohexane, 1 : 1). 155 mg (52 %) of pure **12** (R⁶'= *p*-Cl-phenyl) is obtained. 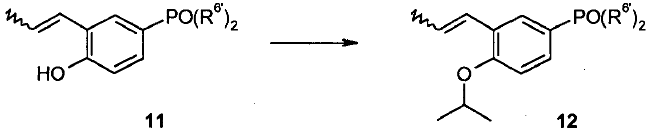 ¹³C NMR (100 MHz, CDCl₃): δ = 19.0, 21.9, 70.6, 112.8 (d, *J =* 13 Hz), 121.2, 122.3, 124.8, 128.0, 128.8 (d, *J* = 13 Hz), 130.3, 130.7, 131.7, 133.3 (d, *J* = 11 Hz), 138.6, 157.7

### EXAMPLE 3

A solution of t-Butyl lithium (0.8 mmole) in 5 ml of Et₂O is dropped slowly to a solution of **11'** (0.4 mmole, 96.5 mg) in 2 ml THF, at -78°C. 15 min later PO(R^{6'})₂ (R^{6'}= phenyl, 0.8 mmole, 189.3 mg) in 10 ml of THF is added slowly. The reaction mixture is stirred for 30 min at -78°C an then allowed under stirring to warm up to room temperature within 3 h. Aqueous, saturated NH₄Cl (6ml) is added, the THF removed and the residue extracted with CH₂CI₂ (3 x 10ml). The combined organic layers are washed with water, dried with anhydrous MgSO₄, filtered and concentrated. The residue is purified by flash chromatography (50% EtOAc in cyclohexane). 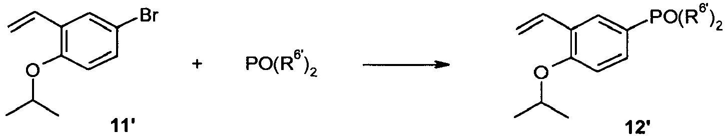 ¹³C-NMR (125 MHz, CDCl₃) δ= 22.0, 70.7, 112.8 (d, J = 13.4Hz), 115.6, 127.5 (d,. J = 11.8 Hz). 127.7 (d, J = 18.9Hz), 128.4 (d, J =19 Hz), 131.1.

### EXAMPLE 4

a) A solution of t-Butyl lithium (0.8 mmole) in 5 ml of Et₂O is dropped slowly to a solution of **11'** (0.4 mmole, 96.5 mg) in 2 ml THF, at -78°C. 15 min later **13** (0.8 mmole, 84.9 mg) in 10 ml of THF is added slowly. The reaction mixture is stirred for 30 min at -78°C an then allowed under stirring to warm up to room temperature overnight. Aqueous, saturated NH₄Cl (6ml) is added, the THF removed and the residue extracted with CH₂Cl₂ (3 x 10ml). The combined organic layers are washed with water, dried with anhydrous MgSO₄, filtered and concentrated. The residue is purified by flash chromatography (5% EtOAc in cyclohexane). 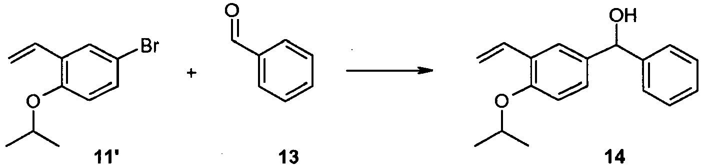 ¹³C-NMR (125 MHz, CDCl₃) δ= 22.2, 71.0, 76.0, 114.1, 114.3, 125.0, 126.5, 127.0, 127.4, 127.8, 128.4, 131.9, 135.9, 143.9, 154.7.
b) **14** (0.4 mmole, 0,1 g) was dissolved in 15 ml CH₂Cl₂, Pyridinium chromate (0.48 mmole, 103.4 mg) was added slowly and the resulting mixture was stirred at room temperature for 1 h. The solvent was removed and the residue purified by flash chromatography (5% EtOAc in cyclohexane). 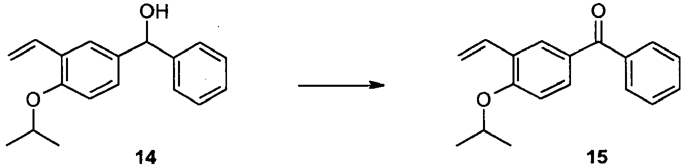 ¹³C-NMR (125 MHz, CDCl₃) δ= 22.1, 70.8, 112.2, 115.4, 127.3. 128.2. 129.3. 129.6, 129.7, 131.2, 131.6, 131.8. 138.3, 158.7, 195.6.

### EXAMPLE 5

Second generation Grubb's catalyst **16** (Mes = mesityl, 153 mg, 0.18 mmole) and CuCl (31 mg, 0.31 mmole) are placed in Schlock's flask. CH₂Cl₂ (3 ml) is added under Argon and a solution of **12** (R^{6'}= *p*-Cl-phenyl, 86 mg, 0.19 mmole;) in CH₂Cl₂ (6 ml) is added. The solution is stirred at 40 °C for 40 min under Argon. CuCl (10 mg) is added and the mixture is stirred for 1 h. Thereafter solvent is evaporated, ethyl acetate (ca. 20 ml) is added, solid residues are filtered off and the filtrate is concentrated under vacuum. The product is purified by column chromatography (ethyl acetate / cyclohexane, 1:1). The product **1 b** (R^{6'} = *p*-Cl-phenyl, 131 mg, 81 %) is obtained as a green solid.

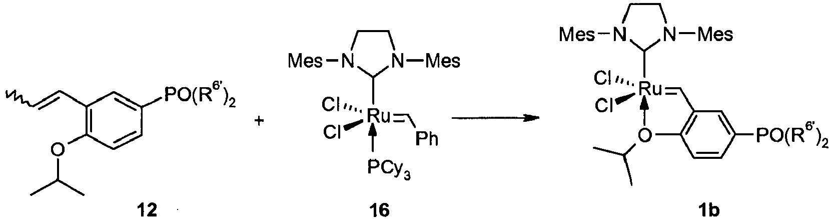

LRMS (ESI, MeOH and CH₂Cl₂): 896.1 (M⁺). HRMS (ESI, MeOH and CH₂Cl₂): calcd. for C₄₃H₄₅O₂N₂ ³⁵Cl₃ ¹⁰²Ru (M⁺-Cl): 859.1322; found 859.1358.

### EXAMPLE 6

a) A solution of **17** (500 mg) in 1,2,4-trichlorobenzene (8 ml) is heated at 210 C for 6 h. After cooling, hexane (ca.80 ml) is added and 12 hours later a solid product is formed, which is filtered-off and dried. After chromatography (hexane / ethyl acetate, 3 : 2) 383 mg of the product **18** is obtained. 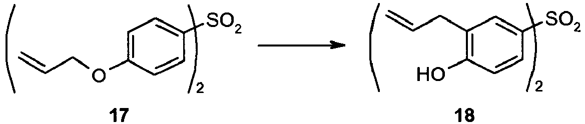
b) **18** (165 mg; 0.5 mmole), RhCl₃·3H₂O (13.1 mg, 0.05 mmole, 10 % mol) and *p*-toluene sulfonic acid (6.8 mg, 0.05 mmole, 10 % mol) are placed in flask. EtOH (4.5 ml) and H₂O (0.5 ml) are added and the mixture is refluxed for 3h. The mixture is evaporated to dryness, ethyl acetate is added and then filtered over 5 g of silica gel. The filtrate is evaporated. 157 mg of the product **19** is obtained. 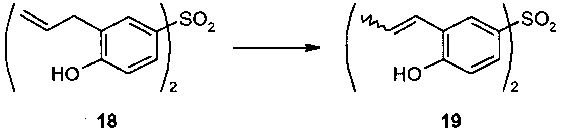
c) A solution of **19** (440 mg) in 1,2,4-trichlorobenzene (7 ml) is heated at 210 C for 6 h. After cooling, hexane (ca.80 ml) is added and 12 hours later a solid product is formed, which is filtered-off and dried. After chromatography (hexane / ethyl acetate, 3 : 2) 258 g of the product **20** is obtained. 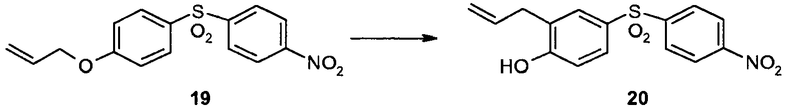 mₚ: 147-148°C
d) **20** (258 mg; 0.75 mmole), RhCl₃·3H₂O (19 mg, 0.075 mmole, 10 % mol) and p-toluene sulfonic acid (0.014 g, 0.075 mmole, 10 % mol) are placed in flask. EtOH (4.5 ml) and H₂O (0.5 ml) are added and the mixture is refluxed for 3h. The mixture is evaporated to dryness, ethyl acetate added and then filtered over 5g of silica gel. The filtrate is evaporated. 235 mg of the product **21** is obtained.

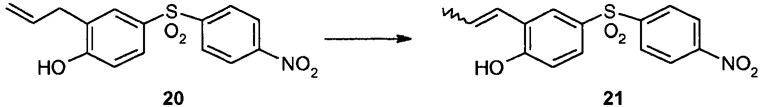

### EXAMPLE 7

Second generation Grubb's catalyst **16** (Mes = mesityl, 140 mg, 0.166 mmole) and CuCl (20mg, 0.20 mmole) are placed in Schlock's flask. CH₂Cl₂ (4 ml) is added under Argon and then a solution of **21** (56 mg, 0.165 mmole) in CH₂Cl₂ (5 ml) is added. The solution is stirred at 40 °C for 50 min under Argon. Thereafter, solvent is evaporated, ethyl acetate (ca. 10 ml) is added, white solid is filtered off and the filtrate is concentrated under vacuum. The product is purified by column chromatography (15 %-30% ethyl acetate in cyclohexane). The product **1f** (80 mg, 60 %) is obtained as a green solid.

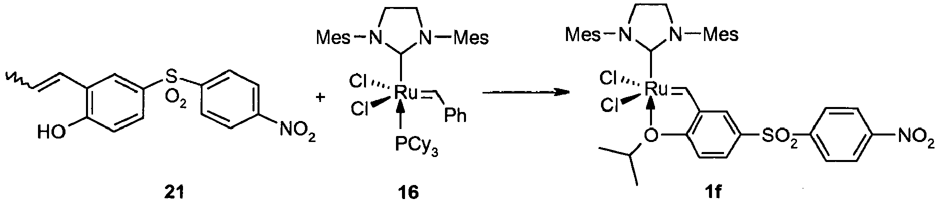

### EXAMPLE 8

Analogously to the processes described in the examples 1 to 7, the following compounds of formula **1c, 1d**, **1e, 1g** and **1h** are obtained. For instance, according to example 5 compound **12'** is a ligand for complex **1c,** compound **15** for complex **1d** or according to example 4 and 5 heptanone can be reacted with **11',** oxidised and reacted with **16** to obtain complex **1e.**

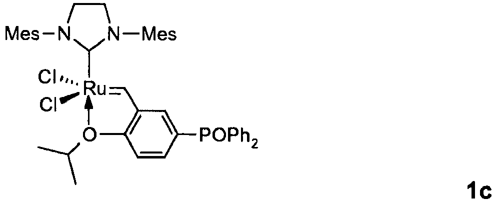

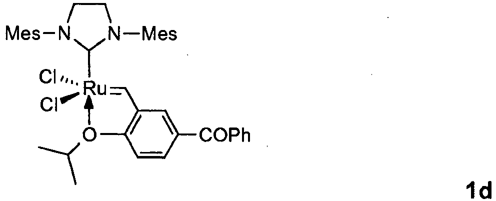

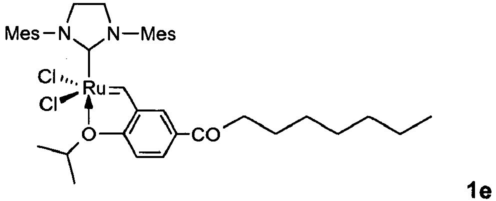

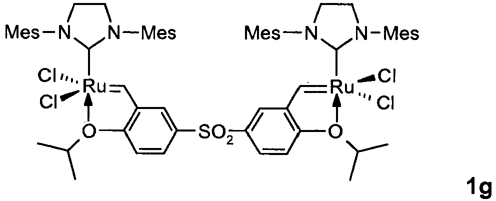

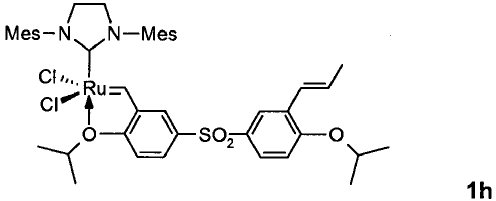

### EXAMPLE 9

Toluene is degassed by bubbling through nitrogen, **22** is dissolved in 10 ml of degassed toluene and added into the reaction flask. The solution is heated up to 80°C and freshly prepared catalysts **1c-h** is added (1^{st}) under nitrogen. After stirring for 60 min at the same temperature the conversion is checked by HPLC. A second amount of catalysts **1c-h** (2^{nd}) is added under nitrogen and the conversion is checked 60 min later a second time by HPLC. Figure 1 is a graph comparing the cyclisation speed of **22.** Table 1 shows the results of the HPLC analysis, wherein the catalyst **1c-h** are compared with a known catalyst of formula **1i** (Angew. Chem. Int. Ed. 2002, 41, 4038).

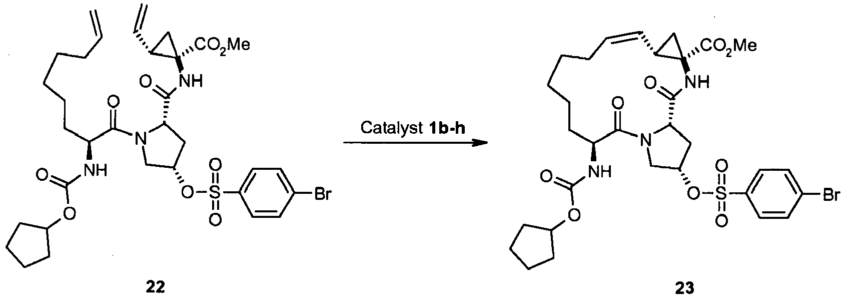

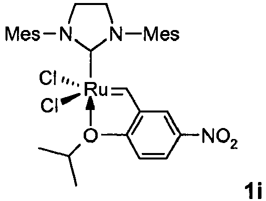

**Table 1**

| | | | | conversion [%Peak at 200nm] | |
|---|---|---|---|---|---|
| catalyst | 1^{st} [mol%] | **22** [mol] | toluene [ml] | **23** [60 min] | **22** [60 min] |
| | 2^{nd} [mol%] | | | **23** [120 min] | **22** [120 min] |
| **1c** | 0,4 | 0,0075 | 554 | 66,4 | 33,6 |
| | 0,2 | | | 96,2 | 3,8 |
| **1d** | 0,4 | 0,0075 | 554 | 80,1 | 19,9 |
| | 0,2 | | | 96,9 | 3,1 |
| **1e** | 0,4 | 0,0075 | 554 | 89,9 | 10,1 |
| | 0,2 | | | 98,9 | 1,1 |
| **1f** (1^{st} run) | 0,4 | 0,0075 | 554 | 99,3 | 0,7 |
| | 0,2 | | | 99,1 | 0,9 |
| **1f** (2^{nd} run) | 0,4 | 0,0025 | 185 | 91,3 | 8,7 |
| | 0,2 | | | 99,5 | 0,5 |
| **1g** | 0,2 | 0,0075 | 554 | - | - |
| | 0,1 | | | 98,8 | 1,2 |
| **1h** | 0,4 | 0,0075 | 554 | 68,7 | 31,3 |
| | 0,2 | | | 88,7 | 11,3 |
| **1i** (1^{st} run) | 0,4 | 0,0075 | 554 | - | - |
| | 0,2 | | | 96,5 | 3,5 |
| **1i** (2^{nd} run) | 0,4 | 0,015 | 1008 | 77,4 | 22,6 |
| | 0,2 | | | 92,8 | 7,2 |

### EXAMPLE 10

23.5 g Tetrakis hydroxy methyl phosphonium chloride (80%, 98.7 mmole) is dissolved in isopropanole (35 ml) under a nitrogen atmosphere. Then 12.1 g (98.7 mmole) of a 45% KOH solution is added within 5 min while the solution is cooled (temperature 20-25°C). After stirring the suspension for another 30 min under nitrogen, the mixture is filtered and the inorganic residue is washed with 20 ml of degassed isopropanole. The combined isopropanole solution is stored under a nitrogen atmosphere until use.

After cooling to 60°C 2.3 g (2.8 mmole) of the trihydroxy methyl phosphine (THP) solution is added to the reaction mixture of example 9. After stirring for 5 h at 60°C the mixture is cooled to room temperature and extracted twice with 40 ml of degassed water, 40 ml of 0.5 M HCl, 40 ml of 0.5 M NaHCO₃ solution, and 40 ml of water. Approx. 695 ml of toluene are distilled of at 50°C *in vacuum* (150 mbar) and the residue is treated at 50°C with 1.4 g of charcoal. The remaining liquid is added to 210 ml of pre-cooled methyl cyclohexane (5°C). After stirring for further 60 min at 5°C the precipitate is filtered and washed with 100 ml of methyl cyclohexane (twice). The white solid is dried *in vacuum* at 30°C to yield **23** as an almost white powder.

| catalyst | total yield | % of **23** | % of **22** |
|---|---|---|---|
| **1c** | 96,2 | 86,02 | 1,20 |
| **1d** | 94,3 | 85,44 | 1,95 |

## Claims

1. A compound of formula **1a,** 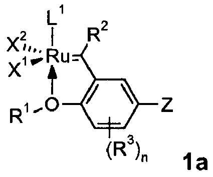 wherein:
X¹ and X² are anionic ligands;
L¹ is a neutral ligand;
n is 0, 1, 2 or 3;
R¹ is -C₁₋₆-alkyl, -C₁₋₆-haloalkyl, -C₃₋₈-cycloalkyl or -C₇₋₁₃-aralkyl;
R² is H, -C₁₋₆-alkyl, -C₂₋₆-alkenyl, -C₂₋₆-alkynyl or aryl;
R³ is -C₁₋₆-alkyl, -C₁₋₆-alkoxy, aryl, F or Cl;
Z is -CO-R⁴, -SO₂-R⁵ or -PO(R⁶)₂;
R⁴ is -C₁₋₆-alkyl or -C₃₋₈-cycloalkyl, both optionally substituted by one or more groups each independently selected from F, Cl, Br, I or -C₁₋₆-alkoxycarbonyl, or aryl or heteroaryl both optionally substituted by one or more groups each independently selected from F, Cl, Br, I, -C₁₋₆-alkyl, -C₁₋₆-alkoxy, -NO₂, -CN, -CF₃, -OCF₃ or -C₁₋₆-alkoxycarbonyl;
R⁵ is -C₁₋₈-fluoroalkyl, aryl or heteroaryl, wherein aryl or heteroaryl are both optionally substituted by one or more groups each independently selected from F, Cl, Br, I, -C₁₋₆-alkyl, -C₁₋₆-alkenyl, -C₁₋₆-alkoxy, -NO₂, -CN, -CF₃, -OCF₃, -C₁₋₆-alkoxycarbonyl, -SO₂-C₁₋₆-alkyl or -SO₂-aryl; and
R⁶ are each independently -C₁₋₆-alkyl, -C₃₋₈-cycloalkyl, aryl or heteroaryl, wherein aryl or heteroaryl are both optionally substituted by one or more groups each independently selected from F, Cl, Br, I, -C₁₋₆-alkyl, -C₁₋₆-alkoxy, -NO₂, -CN, -CF₃, -OCF₃, or -C₁₋₆-alkoxycarbonyl; or
R⁴, R⁵ and R⁶ are each independently a group of formula **1'** 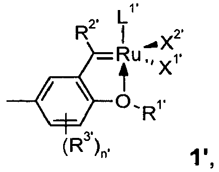
wherein:
X^{1'} and X^{2'} are anionic ligands;
L^{1'} is a neutral ligand;
R^{1'} is -C₁₋₆-alkyl, -C₁₋₆-haloalkyl, -C₃₋₈-cycloalkyl or -C₇₋₁₃-aralkyl;
R^{2'} is H, -C₁₋₆-alkyl, -C₂₋₆-alkenyl, -C₂₋₆-alkynyl or aryl;
R^{3'} is -C₁₋₆-alkyl, -C₁₋₆-alkoxy, aryl, F or Cl; and
n' is 0, 1, 2 or 3.

2. A compound according to claim 1, wherein
X¹ and X² each independently are F, Cl, Br or I.

3. A compound according to claims 1 or 2, wherein
X¹ and X² are Cl.

4. A compound according to claims 1-3, wherein
Z is -CO-R⁴, -SO₂-R⁵ or -PO(R⁶)₂;
R⁴ is aryl or heteroaryl both optionally substituted by one or more groups each independently selected from F, Cl, Br, I, -C₁₋₆-alkyl, -C₁₋₆-alkoxy, -NO₂, -CN, -CF₃, -OCF₃ or -C₁₋₆-alkoxycarbonyl;
R⁵ is aryl or heteroaryl, both optionally substituted by one or more groups each independently selected from F, Cl, Br, I, -C₁₋₆-alkyl, -C₁₋₆-alkenyl, -C₁₋₆-alkoxy, -NO₂, -CN, -CF₃, -OCF₃, -C₁₋₆-alkoxycarbonyl, -SO₂-C₁₋₆-alkyl, -SO₂-aryl or a group of formula **1'**; and
R⁶ are each independently -C₁₋₆-alkyl, -C₃₋₈-cycloalkyl, aryl or heteroaryl, wherein aryl or heteroaryl are both optionally substituted by one or more groups each independently selected from F, Cl, Br, I, -C₁₋₆-alkyl, -C₁₋₆-alkoxy, -NO₂, -CN, -CF₃, -OCF₃, or -C₁₋₆-alkoxycarbonyl.

5. A compound according to claims 1-4, wherein
Z is -CO-R⁴, -SO₂-R⁵ or -PO(R⁶)₂;
R⁴ is aryl optionally substituted by one or more groups each independently selected from F, -C₁₋₆-alkoxy, -NO₂ or -CF₃ ;
R⁵ is aryl optionally substituted by one or more groups each independently selected from F, -C₁₋₆-alkoxy, -NO₂, -CF₃, -SO₂-C₁₋₆-alkyl or -SO₂-aryl; and
R⁶ are aryl, both optionally substituted by one or more groups each independently selected from F, -C₁₋₆-alkoxy, -NO₂ or -CF₃.

6. A compound according to claims 1-5, wherein
n is 0.

7. A compound according to claim 1, wherein
R¹ is iso-propyl.

8. A compound according to claims 1-7, wherein
R² is H or -CH₃.

9. A compound according to one of the claims 1-8, wherein:
L¹ is P(R¹¹)₃ or a ligand of formula **6a, 6b, 6c** or **6d:** 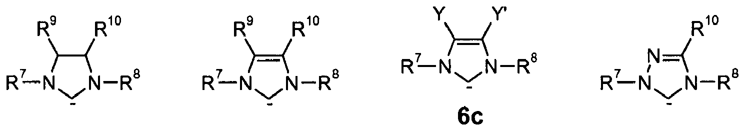 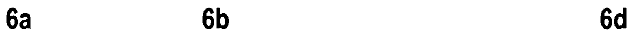
R¹¹ is -C₁₋₆-alkyl, -C₃₋₈-cycloalkyl or aryl;
R⁷ and R⁸ are each independently H, -C₁₋₆-alkyl, -C₂₋₆-alkenyl or phenyl, wherein the phenyl is optionally substituted with up to three groups independently selected from -C₁₋₆-alkyl, -C₁₋₆-alkoxy or halogen;
R⁹ and R¹⁰ are each independently H, -C₁₋₆-alkyl, -C₂₋₆-alkenyl or phenyl, wherein the phenyl is optionally substituted with up to three groups independently selected from -C₁₋₆-alkyl, -C₁₋₆-alkoxy or halogen; or
R⁹ and R¹⁰ together with the carbon atoms to which they are attached are combined to form a carbocyclic 3 to 8 membered ring; and
Y and Y' are halogen.

10. A compound according to claim 1-9, wherein
L¹ is a ligand of formula **6a, 6b, 6c** or **6d,** 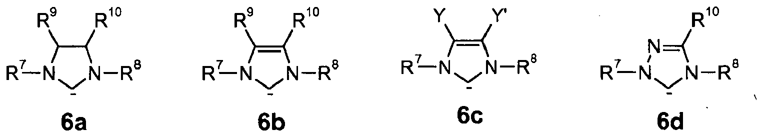 R⁷ and R⁸ are each independently tolyl, *m*-xylyl or mesityl; and
R⁹ and R¹⁰ are each independently H or -C₁₋₆-alkyl.

11. A compound according to one of the claims 1-9, wherein:
L¹ is P(R¹¹)₃; and
R¹¹ is phenyl or cyclohexyl;

12. A compound selected from formulas **1b-1h:** 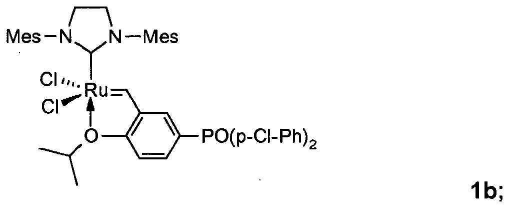 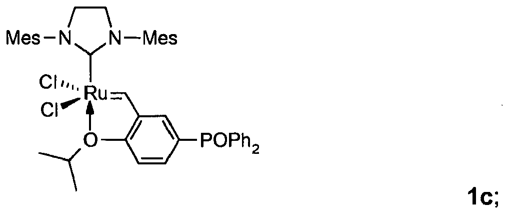 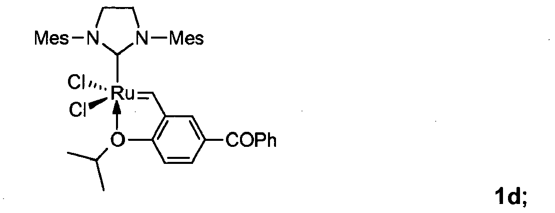 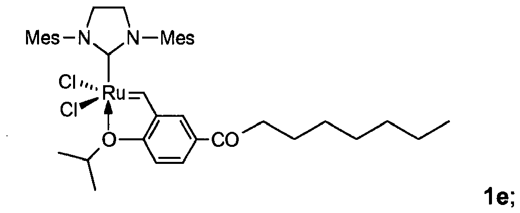 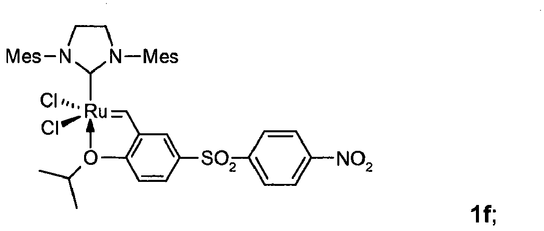 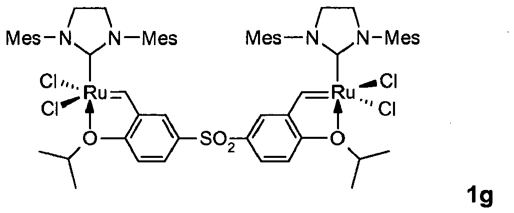 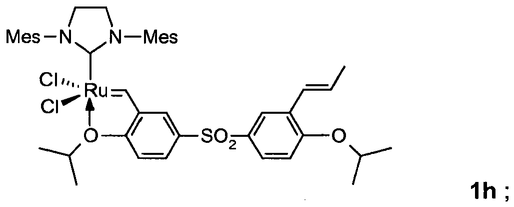 wherein Mes is mesityl, Ph is phenyl and p-Cl-Ph is *para*-chlorphenyl.

13. A process for manufacturing a compound of formula **1a** according to any one of the claims 1-12, said process comprising reacting a compound of formula **2a**: 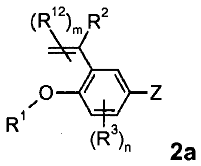 wherein R¹, R², R³, n and Z are defined as in claim 1;
R¹² is -C₁₋₄-alkyl; and
m is 0, 1 or 2;
with a ruthenium complex of formula **5** 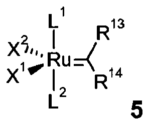 wherein
X¹ , X² and L¹ are as defined in claim 1;.
L² is a neutral ligand, wherein L² must not be the same group as L¹ at the same time;
R¹³ is H, -C₁₋₆-alkyl, -C₂₋₆-alkenyl, -C₂₋₆-alkynyl or aryl; and
R¹⁴ is aryl, vinyl or allenyl.

14. A process for carrying out a metathesis reaction, comprising contacting two compounds each having a C=C double bond, or one compound having at least two C=C double bonds, with a catalyst, wherein the catalyst is a compound according to claims 1-12.

15. A process for carrying out a ring closing or cross metathesis reaction which process comprises contacting a dialkenyl compound with a compound according to claim 1.

## Patentansprüche

1. Verbindung der Formel **1a**, 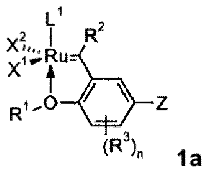 worin:
X¹ und X² anionische Liganden darstellen;
L¹ ist ein neutralerer Ligand;
n ist 0, 1, 2 oder 3;
R¹ ist -C₁₋₆-Alkyl, -C₁₋₆-Haloalkyl, -C₃₋₈-Cycloalkyl oder -C₇₋₁₃-Aralkyl;
R² ist H, -C₁₋₆-Alkyl, -C₂₋₆-Alkenyl, -C₂₋₆-Alkinyl oder Aryl;
R³ ist -C₁₋₆-Alkyl, -C₁₋₆-Alkoxy, Aryl, F oder Cl;
Z ist -CO-R⁴, -SO₂-R⁵ oder -PO(R⁶)₂;
R⁴ ist -C₁₋₆-ALkyl oder -C₃₋₈-Cycloalkyl, beide gegebenenfalls substituiert mit ein oder mehr Gruppen, jeweils unabhängig ausgewählt aus F, Cl, Br, I oder -C₁₋₆-Alkoxycarbonyl, oder Aryl oder Heteroaryl, beide gegebenenfalls substituiert mit ein oder mehr Gruppen, jeweils unabhängig ausgewählt aus F, Cl, Br, I, -C₁₋₆-Alkyl, -C₁₋₆-Alkoxy, -NO₂, -CN, -CF₃, -OCF₃ oder -C₁₋₆-Alkoxycarbonyl;
R⁵ ist -C₁₋₈-Fluoralkyl, Aryl oder Heteroaryl, wobei Aryl oder Heteroaryl beide gegebenenfalls substituiert sind mit ein oder mehr Gruppen, jeweils unabhängig ausgewählt aus F, Cl, Br, I, -C₁₋₆-Alkyl, -C₁₋₆-Alkenyl, -C₁₋₆-Alkoxy, -NO₂, -CN, -CF₃, -OCF₃, -C₁₋₆-Alkoxycarbonyl, -SO₂-C₁₋₆-Alkyl oder -SO₂-Aryl; und
R⁶ ist jeweils unabhängig -C₁₋₆-Alkyl, -C₃₋₈-Cycloalkyl, Aryl oder Heteroaryl, wobei Aryl oder Heteroaryl beide gegebenenfalls substituiert sind mit ein oder mehr Gruppen, jeweils unabhängig ausgewählt aus F, Cl, Br, I, -C₁₋₆-Alkyl, -C₁₋₆-Alkoxy, -NO₂, -CN, -CF₃, -OCF₃ oder -C₁₋₆-Alkoxycarbonyl; oder
R⁴, R⁵ und R⁶ sind jeweils unabhängig eine Gruppe der Formel **1'** 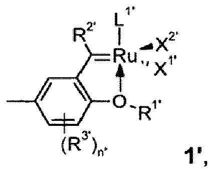
wobei:
X^{1'} und X^{2'} anionische Liganden darstellen;
L^{1'} ist ein neutraler Ligand;
R^{1'} ist -C₁₋₆-Alkyl, -C₁₋₆-Haloalkyl, -C₃₋₈-Cycloalkyl oder -C₇₋₁₃-Aralkyl;
R^{2'} ist H, -C₁₋₆-Alkyl, -C₂₋₆-Alkenyl, -C₂₋₆-Alkinyl oder Aryl;
R³ ist -C₁₋₆-Alkyl, -C₁₋₆-Alkoxy, Aryl, F oder Cl; und
n' ist 0, 1, 2 oder 3.

2. Verbindung nach Anspruch 1, wobei X¹ und X² jeweils unabhängig F, Cl, Br oder I darstellen.

3. Verbindung nach den Ansprüchen 1 oder 2, wobei X¹ und X² Cl darstellen.

4. Verbindung nach den Ansprüchen 1 bis 3, wobei
Z -CO-R⁴, -SO₂-R⁵ oder -PO(R⁶)₂ darstellt;
R⁴ ist Aryl oder Heteroaryl, wobei beide gegebenenfalls substituiert sind mit ein oder mehr Gruppen, jeweils unabhängig ausgewählt aus F, Cl, Br, I, -C₁₋₆-Alkyl, -C₁₋₆-Alkoxy, -NO₂, -CN, -CF₃, -OCF₃ oder -C₁₋₆-Alkoxycarbonyl;
R⁵ ist Aryl oder Heteroaryl, wobei beide gegebenenfalls substituiert sind mit ein oder mehr Gruppen, jeweils unabhängig ausgewählt aus F, Cl, Br, I, -C₁₋₆-Alkyl, -C₁₋₆-Alkenyl, -C₁₋₆-Alkoxy, -NO₂, -CN, -CF₃, -OCF₃, -C₁₋₆-Alkoxycarbonyl, -SO₂-C₁₋₆-Alkyl, -SO₂-Aryl oder eine Gruppe der Formel **1'**; und
R⁶ ist jeweils unabhängig -C₁₋₆-Alkyl, -C₃₋₈-Cycloalkyl, Aryl oder Heteroaryl, wobei Aryl oder Heteroaryl beide gegebenenfalls substituiert sind mit ein oder mehr Gruppen, jeweils unabhängig ausgewählt aus F, Cl, Br, I, -C₁₋₆-Alkyl, -C₁₋₆-Alkoxy, -NO₂, -CN, -CF₃, -OCF₃ oder -C₁₋₆-Alkoxycarbonyl.

5. Verbindung nach den Ansprüchen 1 bis 4, wobei
Z -CO-R⁴, -SO₂-R⁵ oder -PO(R⁶)₂ darstellt;
R⁴ ist Aryl, gegebenenfalls substituiert mit ein oder mehr Gruppen, jeweils unabhängig ausgewählt aus F, -C₁₋₆-Alkoxy, -NO₂ oder -CF₃;
R⁵ ist Aryl, gegebenenfalls substituiert mit ein oder mehr Gruppen, jeweils unabhängig ausgewählt aus F, -C₁₋₆-Alkoxy, -NO₂, -CF₃, -SO₂-C₁₋₆-Alkyl oder -SO₂-Aryl; und
R⁶ ist Aryl, wobei beide gegebenenfalls substituiert sind mit ein oder mehr Gruppen, jeweils unabhängig ausgewählt aus F, -C₁₋₆-Alkoxy, -NO₂ oder -CF₃.

6. Verbindung nach den Ansprüchen 1 bis 5, wobei n 0 darstellt.

7. Verbindung nach Anspruch 1, wobei R¹ Isopropyl darstellt.

8. Verbindung nach den Ansprüchen 1 bis 7, wobei R² H oder -CH₃ darstellt.

9. Verbindung nach einem der Ansprüche 1 bis 8, wobei:
L¹ P(R¹¹)₃ darstellt oder einen Liganden der Formel **6a, 6b, 6c** oder **6d**: 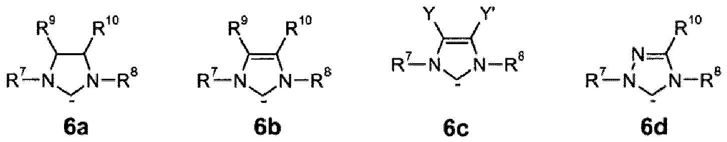
R¹ ist -C₁₋₆-Alkyl, -C₃₋₈-Cycloalkyl oder Aryl;
R⁷ und R⁸ sind jeweils unabhängig H, -C₁₋₆-Alkyl, -C₂₋₆-Alkenyl oder Phenyl, wobei das Phenyl gegebenenfalls substituted ist mit bis zu drei Gruppen, unabhängig ausgewählt aus -C₁₋₆-Alkyl, -C₁₋₆-Alkoxy oder Halogen;
R⁹ und R¹⁰ sind jeweils unabhängig H, -C₁₋₆-Alkyl, -C₂₋₆-Alkenyl oder Phenyl, wobei das Phenyl gegebenenfalls substituted ist mit bis zu drei Gruppen, unabhängig ausgewählt aus -C₁₋₆-Alkyl, -C₁₋₆-Alkoxy oder Halogen; oder
R⁹ und R¹⁰ sind, zusammen mit den Kohlenstoffatomen, mit denen sie verknüpft sind, kombiniert, um einen carbocyclischen 3- bis 8-gliedrigen Ring zu bilden; und Y und Y' sind Halogen.

10. Verbindung nach Anspruch 1 bis 9, wobei
L¹ einen Liganden der Formel **6a, 6b**, **6c** oder **6d** darstellt, 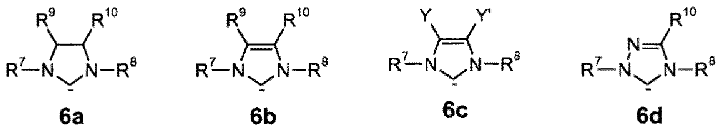
R⁷ und R⁸ sind jeweils unabhängig Tolyl, m-Xylyl oder Mesityl; und
R⁹ und R¹⁰ sind jeweils unabhängig H oder -C₁₋₆-Alkyl.

11. Verbindung nach einem der Ansprüche 1 bis 9, wobei:
L¹ P(R¹¹)₃ darstellt; und
R¹¹ ist Phenyl oder Cyclohexyl;

12. Verbindung, ausgewählt aus den Formeln **1b** bis **1h:** 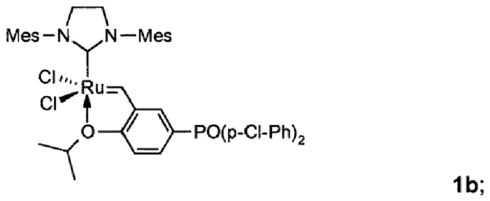 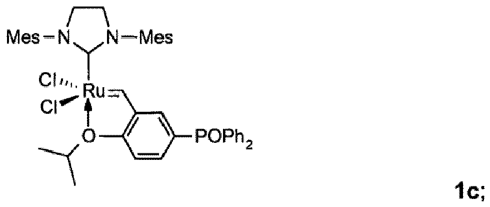 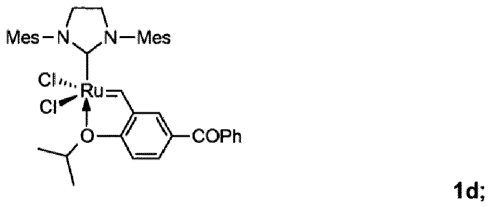 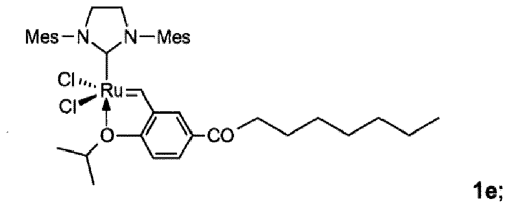 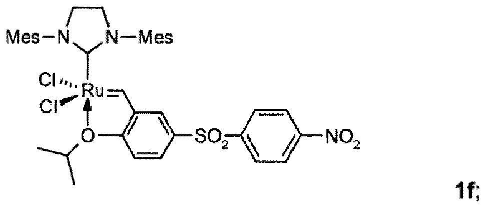 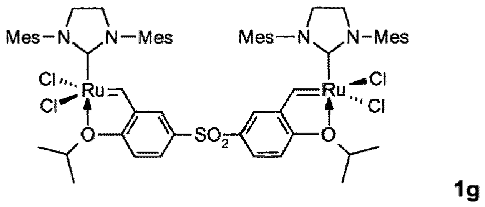 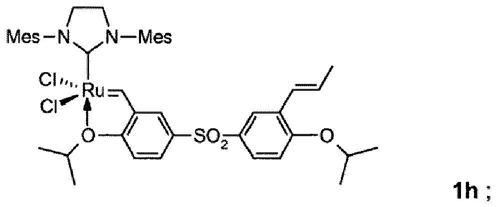 wobei Mes Mesityl, Ph Phenyl und p-Cl-Ph para-Chlorphenyl darstellt.

13. Verfahren zur Herstellung einer Verbindung der Formel **1a** nach irgendeinem der Ansprüche 1 bis 12, wobei das Verfahren umfasst: Umsetzen einer Verbindung der Formel **2a:** 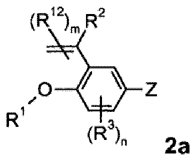 wobei R¹, R², R³, n und Z wie in Anspruch 1 definiert sind;
R¹² ist -C₁₋₄-Alkyl; und
m ist 0, 1 oder 2;
mit einem Ruthenium-Komplex der Formel **5** 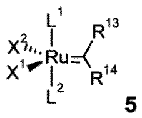 wobei
X¹, X² und L¹ wie in Anspruch 1 definiert sind;
L² ist ein neutraler Ligand, wobei L² nicht gleichzeitig dieselbe Gruppe wie L¹ darstellen darf;
R¹³ ist H, -C₁₋₆-Alkyl, -C₂₋₆-Alkenyl, -C₂₋₆-Alkinyl oder Aryl; und
R¹⁴ ist Aryl, Vinyl oder Allenyl.

14. Verfahren zur Durchführung einer Metathese-Reaktion, umfassend das Inkontaktbringen zweier Verbindungen mit jeweils einer C=C-Doppelbindung, oder einer Verbindung mit mindestens zwei C=C-Doppelbindungen mit einem Katalysator, wobei der Katalysator eine Verbindung nach den Ansprüchen 1 bis 12 darstellt.

15. Verfahren zur Durchführung einer Ringschluss- oder Kreuz-Metathese-Reaktion, wobei das Verfahren das Inkontaktbringen einer Dialkenyl-Verbindung mit einer Verbindung nach Anspruch 1 umfasst.

## Revendications

1. Composé de formule 1a, 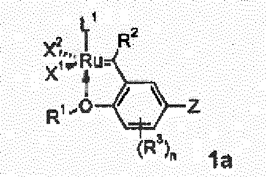 dans laquelle ;
X¹ et X² sont des ligands anioniques ;
L¹ est un ligand neutre ;
n vaut 0, 1, 2 ou 3 ;
R¹ est -alkyle en C_{1 à 6}, -halogénoalkyle en C_{1 à 6}, -cycloalkyle en C_{3 à 8} ou -aralkyle en C_{7 à 13} ;
R² est H, -alkyle en C_{1 à 6}, -alcényle en C_{2 à 6}, -alcynyle en C_{2 à 6} ou aryle ;
R³ est -alkyle en C_{1 à 6}, -alcoxy en C_{1 à 6}, aryle, F ou Cl ;
Z est -CO-R⁴, -SO₂-R⁵ ou -PO(R⁶)₂ ;
R⁴ est -alkyle en C_{1 à 6} ou -cycloalkyle en C_{3 à 8}, tous deux facultativement substitués par un ou plusieurs groupes choisis chacun indépendamment parmi F, Cl, Br, I ou -alcoxycarbonyle en C_{1 à 6}, ou aryle ou hétéroaryle tous deux facultativement substitués par un ou plusieurs groupes choisis chacun indépendamment parmi F, Cl, Br, I, -alkyle en C_{1 à 6}, -alcoxy en C₁ à ₆, -NO₂, -CN, -CF₃, -OCF₃ ou -alcoxycarbonyle en C_{1 à 6} ;
R⁵ est -fluoroalkyle en C_{1 à 8}, aryle ou hétéroaryle, où aryle ou hétéroaryle sont tous deux facultativement substitués par un ou plusieurs groupes choisis chacun indépendamment parmi F, Cl, Br, I, -alkyle en C_{1 à 6}, -alcényle en C_{1 à 6}, -alcoxy en C_{1 à 6}, -NO₂, -CN, -CF₃, -OCF₃, -alcoxycarbonyle en C_{1 à 6}, -SO₂-alkyle en C_{1 à 6} ou -SO₂-aryle ; et
R⁶ est indépendamment -alkyle en C_{1 à 6}, -cycloalkyle en C_{3 à 8}, aryle ou hétéroaryle, où aryle ou hétéroaryle sont tous deux facultativement substitués par un ou plusieurs groupes choisis chacun indépendamment parmi F, Cl, Br, I, -alkyle en C_{1 à 6}, -alcoxy en C₁ à ₆, -NO₂, -CN, -CF₃, -OCF₃ ou -alcoxycarbonyle en C_{1 à 6} ; ou
R⁴, R⁵ et R⁶ sont chacun indépendamment un groupe de formule 1' 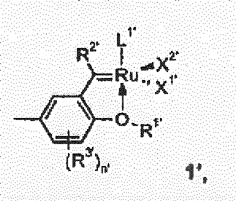
dans laquelle :
X^{1'} et X^{2'} sont des ligands anioniques ;
L^{1'} est un ligand neutre ;
R^{1'} est -alkyle en C_{1 à 6}, -halogénoalkyle en C_{1 à 6}, -cycloalkyle en C_{3 à 8} ou -aralkyle en C_{7 à 13} ;
R^{2'} est H, -alkyle en C_{1 à 6}, -alcényle en C_{2 à 6}, -alcynyle en C_{2 à 6} ou aryle ;
R^{3'} est -alkyle en C_{1 à 6}, -alcoxy en C_{1 6}, -aryle, F ou Cl ; et
n' vaut 0, 1, 2 ou 3.

2. Composé selon la revendication 1, dans lequel
X¹ et X² sont chacun indépendamment F, Cl, Br ou I.

3. Composé selon les revendications 1 ou 2, dans lequel
X¹ et X² sont Cl.

4. Composé selon les revendications 1 à 3, dans lequel
Z est -CO-R⁴, -SO₂-R⁵ ou -PO(R⁶)₂ ;
R⁴ est aryle ou hétéroaryle tous deux facultativement substitués par un ou plusieurs groupes choisis chacun indépendamment parmi F, Cl, Br, I, -alkyle en C_{1 à 6}, -alcoxy en C_{1 à 6}, -NO₂, -CN, -CF₃, -OCF₃ ou -alcoxycarbonyle en C_{1 à 6} ;
R⁵ est aryle ou hétéroaryle, tous deux facultativement substitués par un ou plusieurs groupes choisis chacun indépendamment parmi F, Cl, Br, I, -alkyle en C_{1 à 6}, -alcényle en C_{1 à 6}, -alcoxy en C_{1 à 6}, -NO₂, -CN, -CF₃, -OCF₃, -alcoxycarbonyle en C_{1 à 6}, -SO₂-alkyle en C_{1 à 6}, -SO₂-aryle ou un groupe de formule 1' ; et
R⁶ est indépendamment -alkyle en C_{1 à 6}, -cycloalkyle en C_{3 à 8}, aryle ou hétéroaryle, où aryle ou hétéroaryle sont tous deux facultativement substitués par un ou plusieurs groupes choisis chacun indépendamment parmi F, Cl, Br, I, -alkyle en C_{1 à 6}, -alcoxy en C_{1 à 6}, -NO₂, -CN, -CF₃, -OCF₃ ou -alcoxycarbonyle en C_{1 à 6}.

5. Composé selon les revendications 1 à 4, dans lequel
Z est -CO-R⁴, -SO₂-R⁵ ou -PO(R⁶)₂ ;
R⁴ est aryle facultativement substitué par un ou plusieurs groupes choisis chacun indépendamment parmi F, -alcoxy en C_{1 à 6}, -NO₂ ou -CF₃ ;
R⁵ est aryle facultativement substitué par un ou plusieurs groupes choisis chacun indépendamment parmi F, -alcoxy en C_{1 à 6}, -NO₂, -CF₃, -SO₂-alkyle en C_{1 à 6} ou -SO₂-aryle ; et
R⁶ est aryle, facultativement substitué par un ou plusieurs groupes choisis chacun indépendamment parmi F, -alcoxy en C_{1 à 6}, -NO₂ ou -CF₃.

6. Composé selon les revendications 1 à 5, dans lequel
n vaut 0

7. Composé selon la revendication 1, dans lequel
R¹ est iso-propyle.

8. Composé selon les revendications 1 à 7, dans lequel
R² est H ou -CH₃.

9. Composé selon l'une des revendications 1 à 8, dans lequel :
L¹ est P(R¹¹)₃ ou un ligand de formule 6a, 6b, 6c ou 6d : 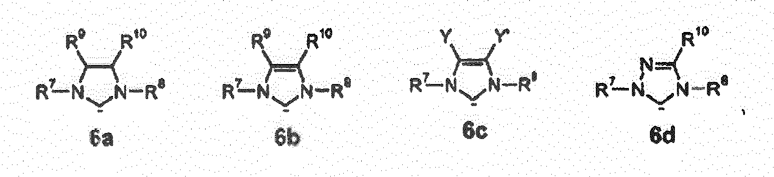
R¹¹ est -alkyle en C_{1 à 6}, -cycloalkyle en C_{3 à 8} ou aryle ;
R⁷ et R⁸ sont chacun indépendamment H, -alkyle en C_{1 à 6}, -alcényle en C_{2 à 6} ou phényle, où le phényle est facultativement substitué par jusqu'à trois groupes indépendamment choisis parmi -alkyle en C_{1 à 6}, -alcoxy en C_{1 à 6} ou halogène ;
R⁹ et R¹⁰ sont chacun indépendamment H, -alkyle en C_{1 à 6}, -alcényle en C_{2 à 6} ou phényle, où le phényle est facultativement substitué par jusqu'à trois groupes indépendamment choisis parmi -alkyle en C_{1 à 6}, -alcoxy en C_{1 à 6} ou halogène ; ou
R⁹ et R¹⁰ conjointement avec les atomes de carbone auxquels ils sont attachés sont combinés pour former un cycle à 3 à 8 chaînons carbocyclique ; et
Y et Y' sont halogène.

10. Composé selon les revendications 1 à 9, dans lequel
L¹ est un ligand de formule 6a, 6b, 6c ou 6d, 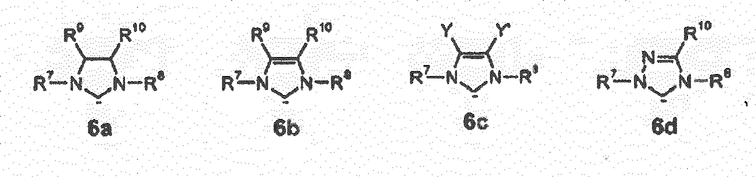
R⁷ et R⁸ sont chacun indépendamment tolyle, *m-*xylyle ou mésityle ; et
R⁹ et R¹⁰ sont chacun indépendamment H ou -alkyle en C_{1 à 6}.

11. Composé selon l'une des revendications 1 à 9, dans lequel :
L¹ est P(R¹¹)₃ ; et
R¹¹ est phényle ou cyclohexyle.

12. Composé choisi parmi les formules 1b à 1h : 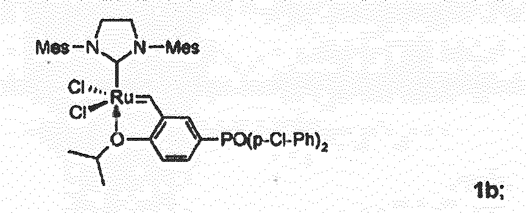 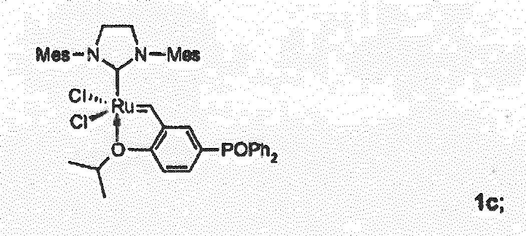 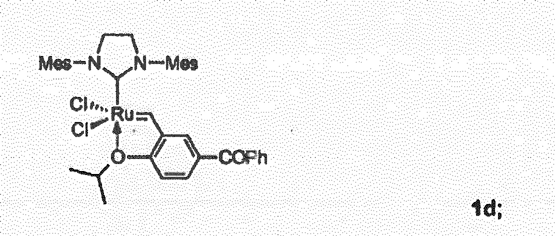 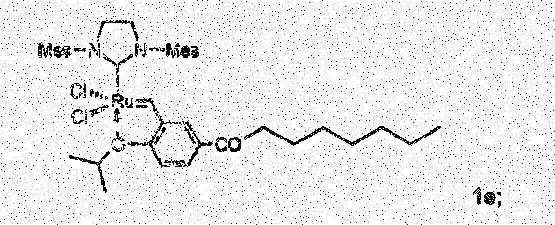 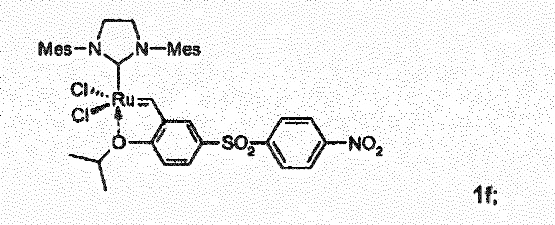 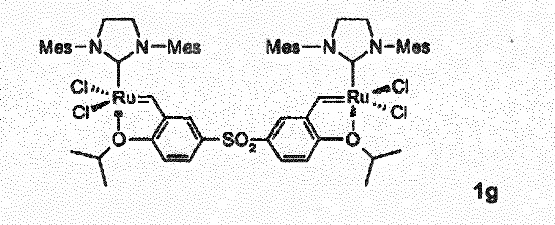 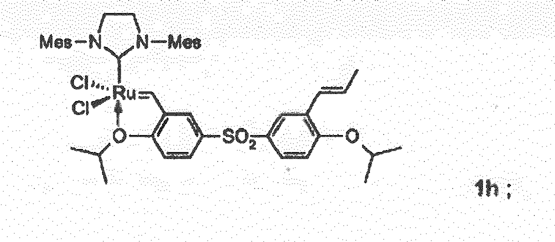 dans lesquelles Mes est mésityle, Ph est phényle et p-Cl-Ph est *para*-chlorphényle.

13. Procédé de fabrication d'un composé de formule la selon l'une quelconque des revendications 1 à 12, ledit procédé comprenant la mise en réaction d'un composé de formule 2a : 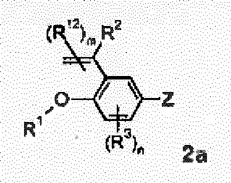 dans laquelle R¹, R², R³, n et Z sont tels que définis à la revendication 1 ;
R¹² est -alkyle en C_{1 à 4} ; et
m vaut 0, 1 ou 2 ;
avec un complexe de ruthénium de formule 5 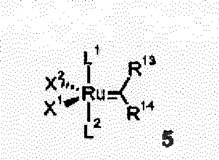 dans laquelle
X¹, X² et L¹ sont tels que définis à la revendication 1 ;
L² est un ligand neutre, où L² ne doit pas être le même groupe que L¹ au même moment ;
R¹³ est H, -alkyle en C_{1 à 6}, -alcényle en C_{2 à 6}, -alcynyle en C_{2 à 6} ou aryle ; et
R¹⁴ est aryle, vinyle ou allényle.

14. Procédé de réalisation d'une réaction de métathèse, comprenant la mise en contact de deux composés ayant chacun une double liaison C=C, ou d'un composé ayant au moins deux doubles liaisons C=C, avec un catalyseur, dans lequel le catalyseur est un composé selon les revendications 1 à 12.

15. Procédé de réalisation d'une réaction de métathèse de fermeture de cycle ou de métathèse croisée, lequel procédé comprend la mise en contact d'un composé dialcényle avec un composé selon la revendication 1.
